# EUROPÄISCHE PATENTSCHRIFT

(11) **EP 0 234 230 B1**
(45) Veröffentlichungstag und Bekanntmachung des Hinweises auf die Patenterteilung: **19.05.1993**
(21) Anmeldenummer: 87100499.0
(22) Anmeldetag: 16.01.1987
(51) Int. Cl.: B23B 31/28, B23B 31/16

(54) **Einrichtung zur Betätigung der Spannbacken eines Kraftspannfutters**
Controlling device for chuck jaws
Dispositif de contrôle des mors de mandrin

(30) Priorität: 25.02.1986 DE 3605957; 11.12.1986 DE 3642309
(43) Veröffentlichungstag der Anmeldung: 02.09.1987
(73) Patentinhaber: SMW Schneider & Weisshaupt GmbH, 88074 Meckenbeuren (DE)
(72) Erfinder: Hiestand, Karl, D-7798 Pfullendorf (DE)
(74) Vertreter: Engelhardt, Guido, Dipl.-Ing.

(56) Entgegenhaltungen:
- DE-A- 3 101 301
- DE-A- 3 218 083
- DE-A- 3 218 084
- DE-A- 3 314 629

## Beschreibung

Die Erfindung bezieht sich auf eine Einrichtung nach dem Oberbegriff des Anspruchs 1.

Eine Einrichtung dieser Art ist durch die DE-OS 32 18 084 bekannt. Der Stellantrieb besteht hierbei aus einem Eingangsglied, einem Abtriebsglied und einem Stellenergiewandler und ist somit aus drei Funktionsglieder zusammengesetzt. Bei dieser Ausgestaltung ist das Eingangsglied an der Hauptspindel der Werkzeugmaschine abgestützt und das Abtriebsglied mit einem Bewegungs-Wandlungssystem, mittels dem die Veränderung der auf ein Werkstück ausgeübten Spannkraft bewerkstelligt wird, verbunden. Um große umlaufende Massen zu vermeiden, ist der Stellenergiewandler hierbei stationär angeordnet und wirkt mit einem zwischen dem Eingangsglied und dem Abtriebsglied des Überlagerungsgetriebes vorgesehen Überlagerungseingang zusammen, so daß zwischen diesen Teilen ein Drehmoment für eine Stelldrehbewegung erzeugt werden kann.

Als Stellenergiewandler kann ein elektromagnetischer Wandler zur Erzeugung magnetischer Wechselfelder vorgesehen werden bzw. dieser ist für die Umsetzung mechanischer Energie in Energie magnetischer Wechselfelder ausgebildet, wobei die Wirkverbindung mit dem Übertragungseingang des Überlagerungsgetriebes durch magnetische Kopplung erfolgt. Es ist aber auch möglich, einen Elektromotor oder einen Druckluftmotor als Stellenergiewandler zu verwenden.

Um das Reaktionsmoment abzustützen, sind die Stellenergiewandler, deren Abtriebsmoment jeweils am Überlagerungseingang des Überlagerungsgetriebes in dieses eingespeist wird, stationär anzuordnen, so daß ein erheblicher Raumbedarf unumgänglich ist. Abgesehen davon, daß das Überlagerungsgetriebe ebenfalls groß baut und teuer in der Herstellung ist, ist auch der Aufwand, um diesem die notwendige Energie zur Erzeugung einer Stelldrehbewegung zuzuführen, erheblich. Wird ein Elektromotor oder ein Druckluftmotor als Stellenergiewandler vorgesehen, ist diesem ein ständig mit der Drehzahl der Hauptspindel der Werkzeugmaschine umlaufendes Planetenradgetriebe nachzuschalten, um eine Triebverbindung mit dem Überlagerungsgetriebe herzustellen. Abgesehen davon, daß durch das ständig umlaufende Planetenradgetriebe störende Geräusche hervorgerufen werden, ist bei der bekannten Vorrichtung zur Erzeugung einer Stelldrehbewegung demnach nicht nur der Bauaufwand außerordentlich groß, so daß diese teuer in der Herstellung ist, sondern es sind auch, bedingt durch die Vielzahl der erforderlichen und an der Kraftübertragung beteiligten Bauteile erhebliche Leistungsverluste in Kauf zu nehmen und die Störanfälligkeit ist erheblich.

Aufgabe der Erfindung ist es daher, eine Einrichtung der vorgenannten Gattung zu schaffen, mittels der es möglich ist, die Spannbacken eines Kraftspannfutters jederzeit und somit auch während des Betriebes bei sehr hohen Spindeldrehzahlen in einer äußerst zuverlässiger Weise, ohne unmittelbar in die Werkzeugmaschine eingreifen zu müssen, zu betätigen, ohne daß ein besonders großer Bauaufwand erforderlich ist. Vielmehr soll dazu im Bereich der Hauptspindel nur ein geringer Bauraum beansprucht werden, und es sollen keine bzw. nur geringe Wärmebelastungen und Leistungsverluste durch Reibung auftreten. Des weiteren soll die Spannkraft leicht und ohne Schwierigkeiten einstellbar und veränderbar sein, auch soll diese ständig aufrechterhalten und für gleiche Gegebenheiten problemlos reproduziert werden können. Vor allem aber sollen eine hohe Zuverlässigkeit und Standzeit der Einrichtung bei einfacher Handhabung gegeben sein.

Gemäß der Erfindung wird dies durch die im kennzeichnenden Teil des Anspruchs 1 angegebenen Merkmale erreicht.

Sehr vorteilhaft ist es hierbei, die Verspannung und/oder die Verstellung der Funktionsglieder des Rotationsmotors gegeneinander mittels der diesem zugeführten Energie vorzunehmen.

Nach einer bevorzugten Ausführungsform ist der Rotationsmotor in einem an einer Werkzeugmaschine angeflanschten Halter verdrehbar gelagert und der Stator steht mit der Hauptspindel in Triebverbindung.

Zweckmäßig ist es ferner, eines der Funktionsglieder des Rotationsmotors, z. B. dessen Stator, über Getriebemittel, vorzugsweise mittels eines in an diesem und der Hauptspindel drehfest angebrachten Zahnriemenscheiben eingreifenden Zahnriemens, trieblich mit der Hauptspindel zu koppeln und an dieser abzustützen und das andere Funktionsglied, z. B. den Rotor des Rotationsmotors, ebenfalls über Getriebemittel, vorzugsweise mittels eines in an diesem und dem Verstellglied oder einer mit diesem verbundenen Zwischenglied drehfest angebrachte Zahnriemenscheiben eingreifenden Zahnriemens, trieblich mit dem Verstellglied zu verbinden.

Der Rotationsmotor ist in einfacher Weise als Elektromotor oder als von Druckmittel beaufschlagbarer hydraulischer Verdrängermotor auszubilden.

Zur Umwandlung der von dem Rotationsmotor abgenommenen Drehbewegung in eine Axialbewegung ist es angebracht, das Verstellglied oder ein mit diesem verbundenes Zwischenglied drehfest abzustützen und über einen Schraubtrieb, vorzugsweise einen Rollenschraubtrieb in Form einer Kugelrollspindel oder dgl., mit einem von dem Rotationsmotor angetriebenen Bauteil zu verbinden.

Nach einer andersartigen Ausgestaltung kann zur Umsetzung einer Relativverdrehung des Rotors des Rotationsmotors genenüber dessen Stator auch ein auf einen mit dem Verstellglied verbundener beidseitig beaufschlagbarer Kolben einwirkendes hydraulisches Gestänge in Form einer Flüssigkeitssäule vorgesehen werden, die mittels einer in Abhängigkeit von der Relativverdrehung der beiden Funktionsglieder des Rotationsmotors betätigbaren Pumpe verschiebbar ist.

Hierbei ist es angezeigt, die vorzugsweise als Zahnradpumpe ausgebildete Pumpe in einem mit der Hauptspindel umlaufenden Gehäuse einzusetzen und mit dem Teil des Rotationsmotors trieblich zu verbinden, der gegenüber dem in Abhängigkeit von der Hauptspindel antreibbaren Funktionsglied verstellbar ist. Außerdem sollte dem hydraulischen Gestänge ein Ausgleichsspeicher zugeordnet sein.

Zweckmäßig ist es ferner, das Verstellglied über ein diesem vorgeschaltetes mit der Hauptspindel umlaufendes Untersetzungsgetriebe anzutreiben.

Vorteilhaft ist es des weiteren, den Rotationsmotor unmittelbar in dem Gehäuse der Werkzeugmaschine einzusetzen und dessen gegeneinander verstellbare Funktionsglieder über Zahnräder als Getriebemittel mit der Hauptspindel und dem Verstellglied zu verbinden, wobei der Rotor des Rotationsmotors mit der Hauptspindel und dessen drehbar gelagerter Stator mit einer auf dieser verdrehbar angeordneten Hülse in Triebverbindung stehen sollten und die Hülse über einen Schraubtrieb mit dem drehfest und axial verschiebbar mit der Hauptspindel verbundenen Verstellglied zu koppeln ist.

Nach einer andersartigen Ausgestaltung kann der Stator des Rotationsmotors mit dem Futterkörper eines an eine Werkzeugmaschine angeflanschten Kraftspannfutters und dessen Rotor mit dem in diesem angeordneten Stellglied in Triebverbindung stehen.

Dazu kann der Futterkörper mit einem an diesem befestigten Zahnkranz versehen sein, mittels dem dieser über einen Zahnriemen trieblich mit dem Stator des Rotationsmotors verbunden ist. Zur trieblichen Verbindung des Rotors mit dem Stellglied kann in den Futterkörper des Spannfutters ein Planetenradgetriebe eingesetzt werden, dessen Hohlrad einen Zahnkranz, der über einen Zahnriemen mit dem Rotor des Rotationsmotors verbunden ist, aufweist und über drehbar in dem Futterkörper gelagerte Planetenräder mit einem Sonnenrad in Triebverbindung steht, das über einen Schraubtrieb oder dgl. auf das Stellglied einwirkt.

Die gemäß der Erfindung ausgebildete Einrichtung zur Betätigung der Spannbacken eines Kraftspannfutters ermöglicht nicht nur bei äußerst geringem Energieaufwand eine Verstellung der Spannbacken und eine stufenlose und exakt einstellbar Veränderung der von diesen auf ein eingespanntes Werkstück übertragenen Spannkraft auch während des Betriebes, sondern es wird vielmehr für ein Kraftspannfutter ein Antriebssystem geschaffen, das insbesondere im Bereich der Hauptspindel klein baut, störunempfindlich ist und nur eine geringe Wartung erfordert. Vor allem wird erreicht, daß keine aus Kolben und Zylinder bestehenden Antriebsmittel mehr benötigt werden und daß somit nahezu keine Erwärmungen auftreten und Leistungsverlsute durch Reibung in Kauf zu nehmen sind. Wird nämlich als Stellantrieb ein als Baueinheit extern drehbar gelagerter zweiteiliger Rotationsmotor vorgesehen, dessen Funktionsglieder zwangläufig miteinander verspannbar, aber auch definiert verstellbar sind, so ist es möglich, nach einem Gleichgewichtszustand den Rotationsmotor zur Aufrechterhaltung der eingeleiteten Spannkraft zu verspannen. Da der Rotationsmotor nur bei einer vorzunehmenden Verstellbewegung der Spannbacken Energie aufnimmt und dessen Bauteile im Betrieb gemeinsam umlaufen, ist dessen Leistungsaufnahme demnach gering, der Antriebsmotor kann somit entsprechend klein dimensioniert werden.

Des weiteren ist von Vorteil, daß zur Unterbringung der an der Kraftübertragung beteiligten Bauteile im Bereich der Hauptspindel nur ein kleiner Bauraum zur Verfügung stehen muß, wobei diese Bauteile auf dieser angeordnet werden können und somit auch Werkstückdurchführungen durch die Hauptspindel problemlos zu bewerkstelligen sind. Außerdem sind die Gewichtskräfte dieser Bauteile und damit auch deren Massenkräfte klein, die für deren Beschleunigung erforderliche Leistung ist demnach ebenfalls geringer als aus Kolben und Zylinder bestehenden Antriebsmittel bzw. dem bekannten Stellantrieb. Und da meist handelsübliche Bauteile verwendet werden können, sind die Herstellkosten der erfindungsgemäßen Einrichtung, die auch unter extremen Betriebsbedingungen zuverlässig arbeitet und nahezu keine Wartung erfordert, niedrig. Dennoch ist stets eine den jeweiligen Erfordernissen angepaßte Spannkraft, die in Abhängigkeit von den gegenläufigen Drehmomenten der beiden Funktionsglieder des Rotationsmotors auch ohne Schwierigkeiten reproduzierbar ist, in kurzer Zeit aufzubauen.

In der Zeichnung sind einige Ausführungsbeispiele der gemäß der Erfindung ausgebildeten Einrichtung zur Betätigung der Spannbacken eines Kraftspannfutters dargestellt, die nachfolgend im einzelnen erläutert sind. Hierbei zeigen:
- Figur 1: eine einem Kraftspannfutter zugeordnete Einrichtung zur Betätigung der Spannbacken mittels eines verdrehbaren Stellgliedes mit einem Elektromotor als Stellantrieb, im Axialschnitt,
- Figur 2: die Einrichtung nach Figur 1 mit einem dem Stellglied vorgeschalteten Untersetzungsgetriebe, teilweise im Axialschnitt,
- Figur 3: die Einrichtung nach Figur 1 mit einem durch einen Schraubtrieb axial verstellbaren Stellglied und einem durch ein Druckmedium betätigbaren Rotationsmotor als Stellantrieb, im Axialschnitt,
- Figur 4: ein durch ein hydraulisches Gestänge in Abhängigkeit von der Relativverdrehung der beiden Funktionsglieder eines verspannbaren Rotationsmotors axial verstellbares Stellglied,
- Figur 5: eine in einem Maschinengehäuse einer Werkzeugmaschine eingebaute Einrichtung zur Axialverstellung eines Stellgliedes und
- Figur 6: einen unmittelbar mit dem Spannfutter verbundenen Stellantrieb.

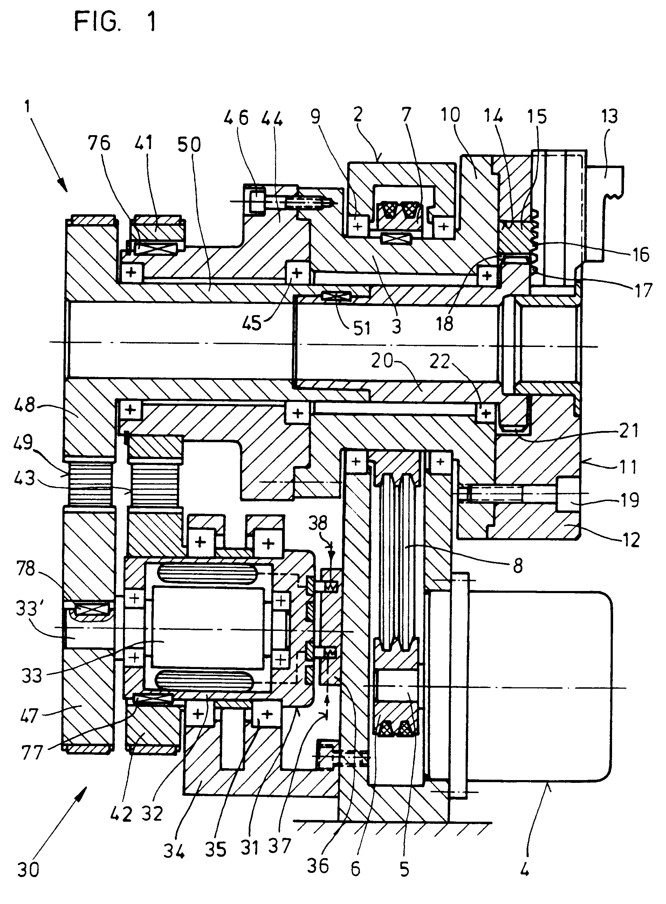

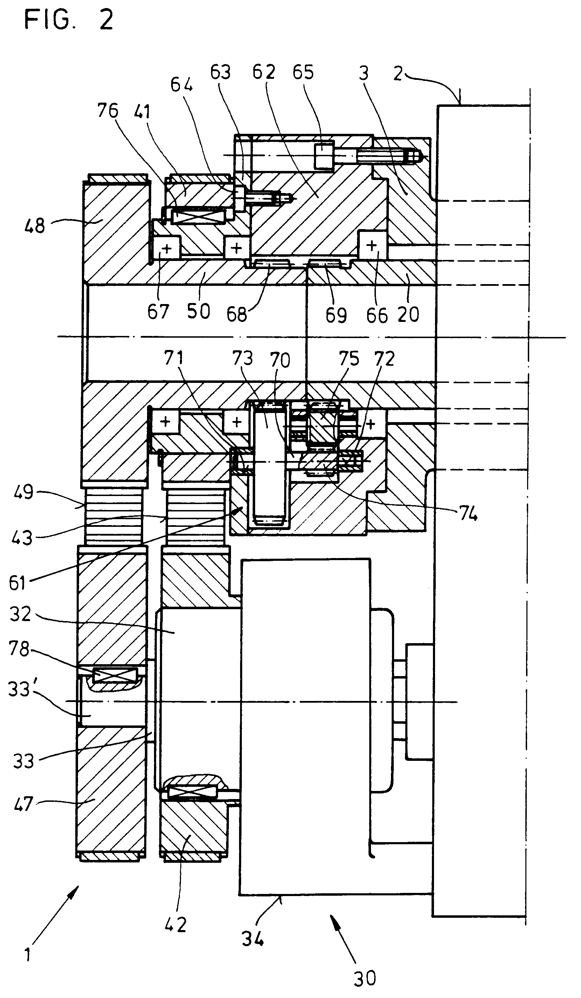

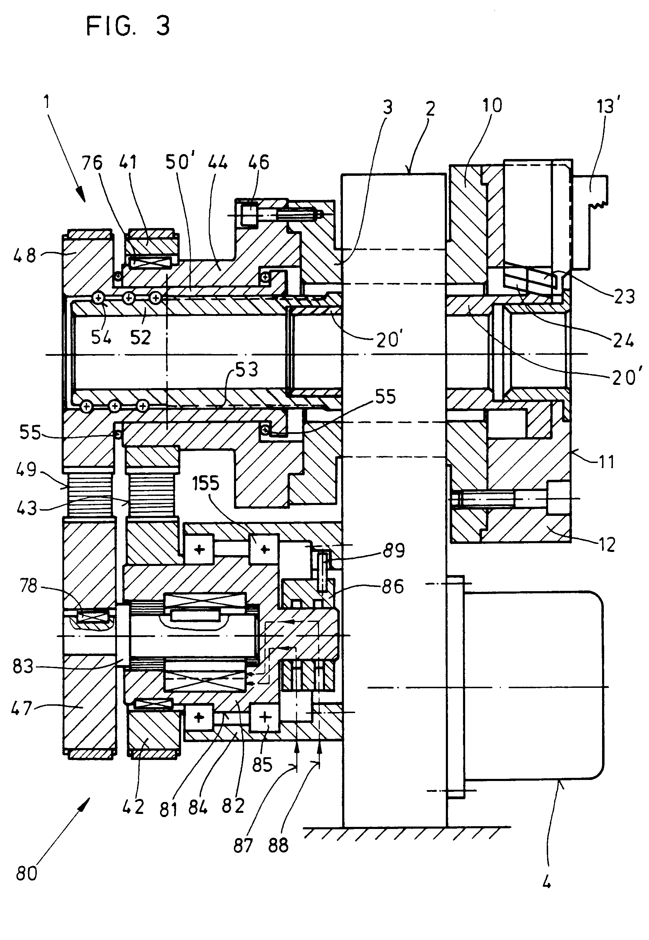

Die in den Figuren 1 und 3 dargestellte und jeweils mit 1 bezeichnete Einrichtung dient zur Betätigung der Spannbacken 13 bzw. 13ʹ eines auf einer Werkzeugmaschine 2 angeordneten Kraftspannfutters 11, die in einem Futterkörper 12 radial verstellbar sind. Dazu ist jeweils ein Stellglied 20 bzw. 20' vorgesehen, das bei der Ausgestaltung nach den Figuren 1 und 2 verdrehbar und bei den Ausgestaltungen nach den Figuren 3 bis 6 axial verschiebbar geführt ist.

Das mittels Wälzlager 22 verdrehbar gelagerte Stellglied 20 ist über einen Zahnkranz 21 mit jeweils in einer Ausnehmung 14 des Futterkörpers 12 tangential verschiebbar geführten Keilstangen 15 trieblich verbunden, die dazu auf der Innenseite mit einer Verzahnung 18 versehen sind. Außerdem weisen die Keilstangen 15 auf der den Spannbacken 13 zugekehrten Stirnseite eine weitere Verzahnung 16 auf, die in eine in die Spannbacken 13 eingearbeitete Verzahnung 17 eingreift. Das axial verschiebbare Stellglied 20' ist dagegen mit Keilhaken 23 versehen, die in an den Spannbacken 13' angeformte Keilhaken 24 eingreifen, so daß die Axialbewegung des Stellgliedes 20' in eine radiale Zustellbewegung der Spannbacken 13' umgelenkt wird.

Das Kraftspannfutter 11 ist mittels Schrauben 19 fest mit einem Spindelflansch 10 der Hauptspindel 3 bzw. 3' der Werkzeugmaschine 2 verbunden, die durch einen Motor 4 antreibbar ist. Dazu sind auf der Abtriebswelle 5 des Motors 4 sowie der mittels Lager 9 abgestützten Hauptspindel 3 Keilriemenscheiben 6 bzw. 7 drehfest gelagert, die durch Keilriemen 8 trieblich miteinander verbunden sind.

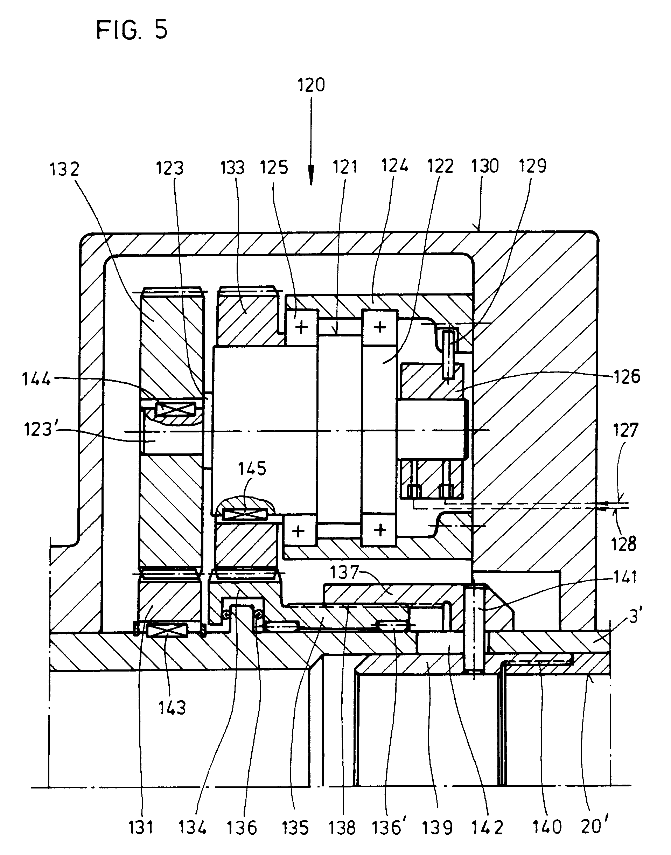

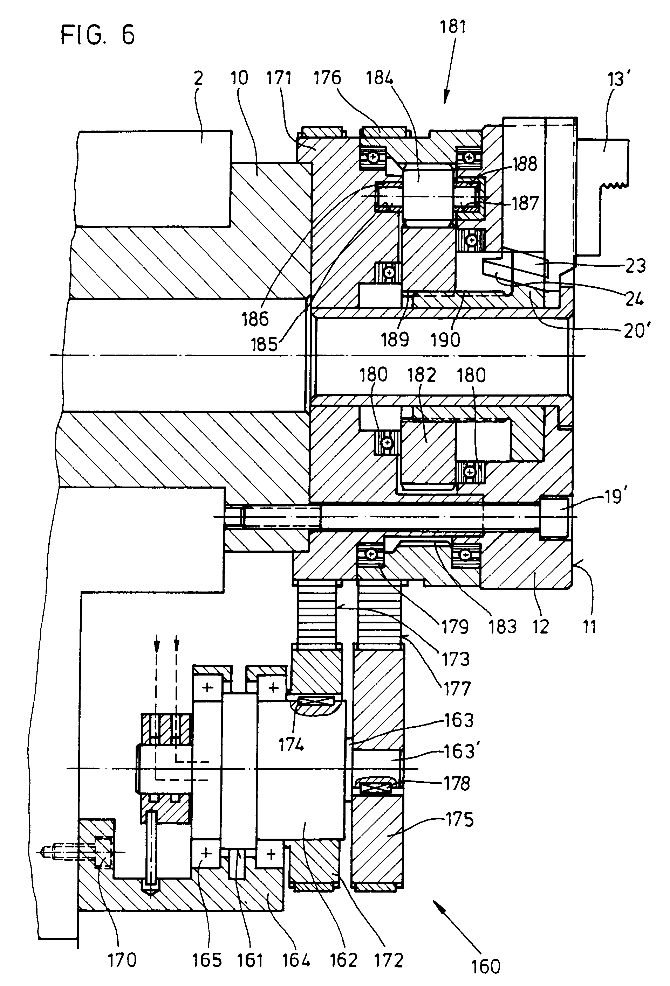

Zum Antrieb des Stellgliedes 20 bzw. 20' und damit der Spannbacken 13, 13' des Kraftspannfutters 11 durch die Einrichtung 1 ist jeweils ein in unterschiedlicher Weise ausgebildeter Stellantrieb vorgesehen, der in den Figuren 1 und 2 mit 30, in Figur 3 mit 80, in Figur 5 mit 120 und in Figur 6 mit 160 bezeichnet ist. Die Stellantriebe 30, 80, 120 bzw. 160 stehen in Triebverbindung mit der Hauptspindel 3 der Werkzeugmaschine 2.

Um dies zu bewerkstelligen, ist bei der Ausgestaltung nach den Figuren 1 bis 3 an der Hauptspindel 3 ein Zwischenstück 44 mittels Schrauben 46 befestigt, das über eine Keilverbindung 76 eine Zahnriemenscheibe 41 trägt, die über einen Zahnriemen 43 mit einer Zahnriemenscheibe 42 zwangläufig verbunden ist. Die Zahnriemenscheibe 42 ist hierbei über eine Keilverbindung 77 drehfest auf einem mittels Wälzlager 35 in einem ortsfesten Halter 34 gelagerten Stator 32 eines verspannbaren Rotationsmotors 31 gelagert, dessen Abtriebswelle 33ʹ über eine Keilverbindung 78 eine weitere Zahnriemenscheibe 47 trägt, die ebenfalls über einen Zahnriemen 49 mit einer Zahnriemenscheibe 48 in Triebverbindung steht. Über einen an dieser vorgesehenen Ansatz 50, auf dem das Zwischenstück 44 mittels Wälzlager 45 drehbar gelagert ist, und mittels eines Keiles 51 ist die Zahnriemenscheibe 48 mit dem Stellglied 20 verbunden, so daß dieses bei verspanntem Rotationsmotor 31, der in diesem Ausführungsbeispiel als Elektromotor ausgebildet ist und in diesem Betriebszustand als Block umläuft, mit der Hauptspindel 3 der Werkzeugmaschine 2 trieblich gekoppelt ist.

Um eine Verstellbewegung der Spannbacken 13 bzw. 13' vorzunehmen, ist lediglich der Rotor 33 des Rotationsmotors 31 gegenüber dessen Stator 32 durch Zufuhr von elektrischer Energie über die Zuführungsleitungen 37 und 38 sowie einen feststehenden Bürstenhalter 36 mehr oder weniger zu verdrehen. Der Stator 33 ist dabei über den durch die Zahnriemenscheiben 42 und 41 sowie den Zahnriemen 43 gebildeten Riementrieb an der Hauptspindel 3 abgestützt. Durch die Verdrehung des Rotors 32 wird somit eine Relativverdrehung der beiden Zahnriemenscheiben 42 und 47 gegeneinander ausgelöst und die Drehzahl des Stellgliedes 20 wird für eine kurze Zeit verändert, die Spannbacken 13 bzw. 13' werden demnach je nach Drehrichtung nach innen oder außen verstellt.

Bei dem Stellantrieb 80 nach Figur 3 ist als Rotationsmotor 81 ein von Druckmittel beaufschlagbarer hydraulischer Verdrängermotor vorgesehen, der mittels Wälzlager 85 als in sich geschlossene Baueinheit in dem an der Werkzeugmaschine 2 angeflanschten Halter 84 verdrehbar gelagert und in den das Druckmittel aus Zuleitungen 87 und 88 über einen mittels eines Sicherungsstiftes 89 drehfest gehaltenen Drehverteiler 86 einbringbar ist. Der Rotor 83 kann demnach auch während eines Arbeitsvorganges mit Druckmittel beaufschlagt und somit gegenüber dem mitumlaufenden Stator 82 verdreht werden, um z. B. eine durch Zentrifugalkräfte bedingte Abnahme der Spannkraft des Kraftspannfutters 11 durch eine Nachführung der Spannbacken 13 bzw. 13' auszugleichen.

Um die Verstellbewegung des Stellantriebes 30 bzw. 80 zu untersetzen, ist bei dem Ausführungsbeispiel nach Figur 2 dem Verstellglied 20 ein als Vorgelegegetriebe ausgebildetes Untersetzungsgetriebe 61 vorgeschaltet. Der Ansatz 50 der Zahnriemenscheibe 48 ist dazu mit einem Zahnkranz 68 versehen, in den ein drehbar gelagertes Zahnrad 73 eingreift, auf dessen Welle 70 ein weiteres Zahnrad 74 angebracht ist, das über ein Zwischenrad 75 mit dem Ebenfalls mit einem Zahnkranz 69 ausgestatteten Stellglied 20 in Triebverbindung steht.

Die die Zahnräder 73 und 74 tragende Welle 70 ist hierbei in Zwischenstücken 62 und 63 drehbar gelagert, die mittels Schrauben 65 mit der Hauptspindel 3 und mittels Schrauben 64 miteinander fest verbunden sind und Bohrungen 71 und 72 zur Aufnahme der Welle 70 aufweisen. Die mittels eines Lagers 66 auf dem Stellglied 20 und weiterer Lager 67 auf dem Ansatz 50 drehbar abgestützten Zwischenstücke 62 und 63 sowie das Getriebe 61 laufen demnach mit der Hauptspindel 3 um, eine mittels des Getriebes 61 untersetzte Verstellung des Stellgliedes 20 erfolgt somit nur bei einer Relativverdrehung der Zahnriemenscheibe 48 gegenüber den Zahnriemenscheibe 41.

Um die Verdrehbewegung der Zahnriemenscheibe 48 gegenüber der Zahnriemenscheibe 41 in eine axiale Verstellbewegung umzuwandeln, ist bei der Ausgestaltung nach Figur 3 ein Schraubtrieb 53 bzw. 54 vorgesehen, der z. B., wie dies in der rechten bzw. linken Hälfte dargestellt ist, als Schraubgewinde oder als Wälzschraubtrieb in Form einer Kugelrollspindel ausgebildet sein kann. Hierbei ist jeweils der an der Zahnriemenscheibe 48 angeformte Ansatz 50ʹmittels Lager 55 axial abgestützt und in dem Zwischenstück 44 drehbar gehalten . Über den Schraubtrieb 53 bzw. 54 ist der Ansatz 50ʹ mit einer Hülse 52 trieblich verbunden. Eine Verdrehbewegung der Zahnriemenscheibe 48 gegenüber der Zahnriemenscheibe 41 wird somit mittels der Schraubtriebe 53 bzw. 54 in eine Axialbewegung der Hülse 52 umgewandelt, so daß die Spannbacken 13' des Kraftspannfutters 11 durch eine Axialverstellung des Stellgliedes 20' betätigt werden können.

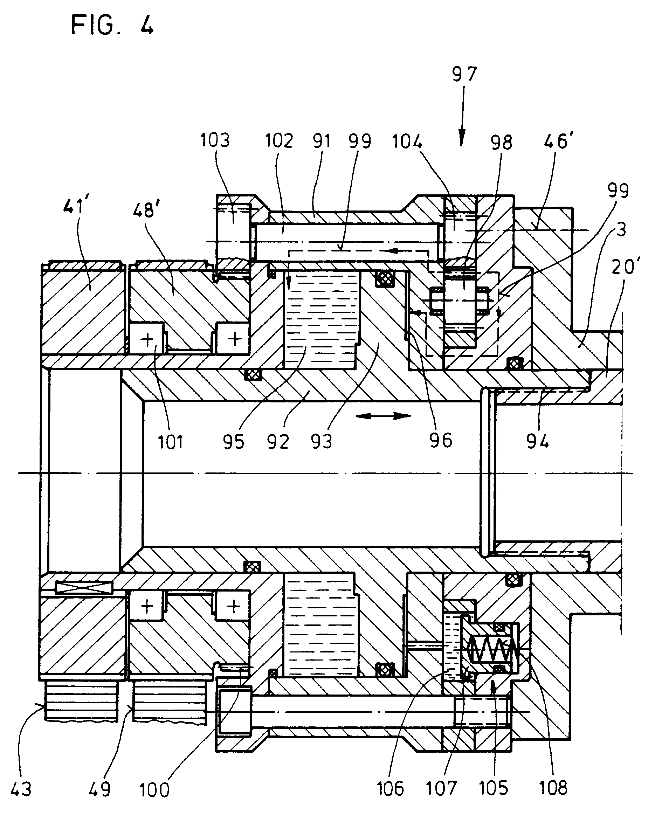

Zur Umsetzung einer Verdrehbewegung kann aber auch, wie dies in Figur 4 gezeigt ist, ein hydraulisches Gestänge in Form einer verschiebbaren Säule eines Druckmittels vorgesehen werden. Dazu ist in einem mittels Schrauben 46' an der Hauptspindel 3 angeflanschten Gehäuse 91 eine Hülse 92 verschiebbar eingesetzt, an der ein beidseitig von Druckmittel beaufschlagbarer Kolben 93 angeformt und die über ein Gewinde 94 mit dem Stelllgied 20' trieblich verbunden ist. Des weiteren ist in dem Gehäuse 91 eine Pumpe 97 angeordnet, die in einfacher Ausgestaltung aus zwei angetriebenen Zahnrädern 98 und 104 bestehen.

Um die mit dem Gehäuse 91 umlaufende Pumpe 97 bei einer durch den nicht dargestellten Rotationsmotor ausgelösten Relativverdrehung seiner beiden Funktionsglieder anzutreiben, ist die mittels eines Lagers 101 verdrehbar auf dem Gehäuse 91 gehaltene Zahnriemenscheibe 48' mit einem Zahnkranz 100 versehen, in den ein auf einer Welle 102 in dem Gehäuse 91 verdrehbar gelagertes Zahnrad 103 eingreift. Auf der Welle 102 ist des weiteren das Zahnrad 104 angeordnet, mit dem das Zahnrad 98 in Eingriff ist.

Bei einer Relativverdrehung der beiden Zahnriemenscheiben 41' und 48' gegeneinander wird somit das in den dem Kolben 93 zugeordneten Druckräumen 95 und 96 sowie einer diese verbindenden Leitung 99, die über die Pumpe 97 geführt ist, befindliche Druckmittel in Form einer Säule bewegt, so daß entweder in dem Druckraum 95 oder in dem Druckraum 96 der Druck erhöht und der Kolben 93 und das mit diesem gekoppelte Stellglied 20' mehr oder weniger nach links oder rechts verschoben werden.

Um evtl. Leckverluste im hydraulischen Gestänge auszugleichen, ist an den Druckraum 96 ein Druckspeicher 105 angeschlossen, der durch einen in einen Raum 106 eingesetzten und von einer Druckfeder 108 beaufschlagten Kolben 107 gebildet ist.

Anhand des Ausführungsbeispiels nach Figur 1 ist nachfolgend die Funktion der Einrichtung 1 erläutert.

Zu Beginn eines Spannvorganges wird bei stehender Hauptspindel 3 der Werkzeugmaschine 2, sobald das in dem Kraftspannfutter 11 einzuspannende Werkstück zwischen den Spannbacken 13 eingelegt ist, der Rotationsmotor 31 betätigt, so daß durch dessen Rotor 33 über den durch die Zahnriemenscheiben 47, 48 und den Zahnriemen 49 gebildeten Riementrieb das Stellglied 20 angetrieben und somit die Spannbacken 13 so lange verstellt werden, bis ein Gleichgewichtszustand zwischen der von dem Rotationsmotor 31 aufgenommenen Energie und der von den Spannbacken 13 auf das Werkstück ausgeübten Spannkraft erreicht ist. Diese kann demnach ohne Schwierigkeiten auf äußerst einfache Weise den jeweiligen Erfordernissen angepaßt bzw. reproduziert werden.

Da der Rotor 33 des Rotationsmotors 31 gegenüber dessen Stator 32 über das aufgebaute Magnetfeld verspannbar ist, laufen der gesamte Rotationsmotor 31, sobald die Hauptspindel 3 mittels des Motors 4 in Betrieb gesetzt wird und die mit dessen Funktionsgliedern verbundenen Bauteilen gewissermaßen als Block um. Die Lage des Stellgliedes 20 wird demnach nicht verändert, vielmehr ist diese durch den verspannten Rotationsmotor 31, dessen Funktionsglieder in diesem Betriebszustand nicht gegeneinander verdrehbar sind, fixiert.

Wird jedoch, um beispielsweise eine Nachspannung vorzunehmen, die Energiezufuhr des Rotationsmotors 31 verändert bzw. der Druckmitteldruck in dem Rotationsmotor 81 gesteigert, so wird dessen Rotor 33, und zwar auch bei umlaufendem Stator 32,relativ zu diesem entsprechend der zugeführten Energie verdreht, so daß das Stellglied 20 nachgeführt und somit die Spannkraft erhöht wird. Über die Zahnriemenscheiben 41 und 42 sowie den diese verbindenden Zahnriemen 43 ist dabei der Stator 32 des Rotationsmotors 31 an der Hauptspindel 3 der Werkzeugmaschine 2 abgestützt. In gleicher Weise ist auch eine Reduzierung der Spannkraft zu bewerkstelligen.

Bei dem Ausführungsbeispiel nach Figur 5 sind die den Stellantrieb 120 bildenden Bauteile unmittelbar in einem Spindelkasten 130 der Werkzeugmaschine eingesetzt. In einem an diesem angeflanschten Halter 124 ist hierbei mittels Wälzlager 125 der mit dem Stellglied 20' verbundene Stator 122 des Rotationsmotors 121 drehbar gelagert, dessen Rotor 123 ist dagegen mit der Hauptspindel 3' gekoppelt. Als Getriebemittel sind bei dieser Ausgestaltung in Eingriff stehende Zahnräder 131 und 132 bzw. 133 und 134 vorgesehen.

Von der Maschinenspindel 3' wird somit über das auf dieser drehfest mittels eines Keiles 143 angeordnete Zahnrad 131 über das Zahnrad 132, das mit der Rotorwelle 123' über einen Keil 144 drehfest verbunden ist, der Rotor 123 des Rotationsmotors 121 angetrieben, bei einer Relativverstellung des Rotors 123 gegenüber dem Stator 122, der ebenfalls mittels eines Keiles 145 mit dem Zahnrad 133 fest verbunden ist, wird durch diesen das Stellglied 20' betätigt.

Dazu ist an dem Zahnrad 134 eine Hülse 135 angebracht, die mittels Wälzlager 136 und 136ʹ drehbar auf der Hauptspindel 3' gelagert und über ein Gewinde 138 mit einer weiteren mit der Hauptspindel 3' drehfest verbundenen Hülse 137 in Triebverbindung steht. Mittels eines Bolzens 141, der in einem in die Hauptspindel 3' eingearbeiteten Schlitz 142 geführt und mit einer mittels eines Gewindes 140 an das Stellglied 20' angeschlossenen Hülse 139 gekoppelt ist, wird eine durch eine Relativverdrehung des Stators 122 gegenüber dem Rotor 123 des Rotationsmotors 121 ausgelöste Verdrehbewegung des Zahnrades 134 somit in eine Axialbewegung umgewandelt und auf das Stellglied 20ʹ übertragen. Die Zuführung des Druckmittels in den Rotationsmotor 121 erfolgt aus Druckmittelleitungen 127 oder 128 wiederum mittels eines durch einen Stift 129 drehfest gehaltenen Druckverteilers 126.

Bei der Ausgestaltung nach Figur 6 ist der ebenfalls extern und als in sich geschlossene Baueinheit mittels Wälzlager 165 in einem an der Werkzeugmaschine 2 mittels Schrauben 170 befestigten Halter 164 verdrehbar gelagerten Rotationsmotor 161 unmittelbar mit dem Kraftspannfutter 11 bzw. dem in diesem eingesetzten den Spannbacken 13' zugeordneten Verstellglied 20' trieblich verbunden. Dazu ist zusammen mit dem Futterkörper 12 mittels der Schrauben 19' an der Maschinenspindel 10 eine Zahnriemenscheibe 171 befestigt, die über einen Zahnriemen 173 mit einer Zahnriemenscheibe verbunden ist, die über eine Keilverbindung 174 mit dem Stator 162 des Rotationsmotors 161 in Triebverbindung steht. Und dessen Rotor 162 ist in gleicher Weise, nämlich mittels einer über eine Keilverbindung 178 auf der Rotorwelle 163' drehfest angeordneten Zahnriemenscheibe 175 und einem Zahnriemen 177 mit einer Zahnriemenscheibe 176 verbunden, die mittels Lager 179 drehbar auf dem Futterkörper 12 gelagert ist.

Zur trieblichen Verbindung der Zahnriemenscheibe 176 mit dem Stellglied 20' ist des weiteren ein Planetenradgetriebe 181 vorgesehen, dessen Sonnenrad 182 über ein in dieses eingearbeitetes Schraubgewinde 189 sowie einem auf dem Stellglied 20' angebrachtes Schraubgewinde 190 mit diesem verbunden ist. Außerdem ist das Sonnenrad 182 über Planetenräder 184, die mittels Lager 186 und 188 in in die Zahnriemenscheibe 171 bzw. den Futterkörper 12 eingearbeitet Bohrungen 185 und 187 gelagert sind, mit einem unmittelbar in die Zahnriemenscheibe 176 eingearbeiteten Hohlrad 183 in Verbindung.

Die durch eine Änderung der Energiezufuhr bewirkte Stelldrehbewegung des Rotors 163 des Rotationsmotors 161 wird somit über die Zahnriemenscheibe 175, den Zahnriemen 177 auf die Zahnriemenscheibe 176 und von dieser über das Planetenradgetriebe 181 auf das Verstellglied 20' übertragen. Die Drehbewegung des mittels Wälzlager 180 axial abgestützten Sonnenrades 182 wird dabei über den Schraubtrieb 189, 190 in eine axiale Verstellbewegung umgelenkt.

## Patentansprüche

1. Einrichtung (1) zur Betätigung der in einem angetriebenen Futterkörper (12) radial verstellbar geführten Spannbacken (13, 13') eines Kraftspannfutters (11), die über Keilstangen (15), Keilhaken (23), Hebel oder ähnliche Zwischenglieder mit einem verdrehbaren oder axial verschiebbaren Verstellglied (20,20') gekoppelt sind, das zum Erzeugen einer Stelldrehbewegung mit einem extern zu dem Kraftspannfutter (11) achsparallel zu diesem angeordneten Stellantrieb (30; 80; 120; 160) in Triebverbindung steht, wobei der Stellantrieb (30; 80; 120; 160) mindestens zwei Funktionsglieder aufweist, von denen ein Funktionsglied mit einem Antriebsglied (Hauptspindel 3, 3') verbunden und an diesem trieblich abgestützt und das andere Funktionsglied mit dem Verstellglied (20, 20') trieblich verbunden ist,
**dadurch gekennzeichnet,**
daß die Funktionsglieder ausschließlich durch einen aus einem über einen Verteiler (36, 86, 126,) an eine Energiequelle angeschlossenen Stator (32, 82, 122, 162) und einen Rotor (33, 83, 123, 163) eines Rotationsmotors (31, 81, 121, 161) gebildet sind,
die gemeinsam verdrehbar gelagert und relativ zueinander verdrehbar und
zur Aufrechterhaltung der Spannkraft zwangläufig miteinander verspannbar und zur Vornahme einer Stelldrehbewegung stufenlos gegeneinander verstellbar sind.

2. Einrichtung nach Anspruch 1,
**dadurch gekennzeichnet,**
daß die Verpannung und/oder die Verstellung der Funktionsglieder (32; 82; 122; 162 bzw. 33; 83; 123; 163) des Rotationsmotors (31; 81; 121; 161) gegeneinander mittels der diesem zugeführten Energie erfolgt.

3. Einrichtung nach Anspruch 1 oder 2,
**dadurch gekennzeichnet,**
daß der Rotationsmotor (31; 81; 121; 161) in einem an einer Werkzeugmaschine (2) angeflanschten Halter(34; 84; 124; 164) verdrehbar gelagert ist und daß der Stator (32; 82; 122; 162) mit deren Hauptspindel (3, 3') in Triebverbindung steht.

4. Einrichtung nach einem oder mehreren der Ansprüche 1 bis 3,
**dadurch gekennzeichnet,**
daß eines der Funktionsglieder des Rotationsmotors (31; 81; 121; 161), z. B. dessen Stator (32; 82; 162), über Getriebemittel, vorzugsweise mittels eines in an diesem und der Hauptspindel (3, 3') drehfest angebrachte Zahnriemenscheiben (41, 41'; 172) eingreifenden Zahnriemens (43; 173), trieblich mit der Hauptspindel (3, 3') verbunden und an dieser abgestützt ist.

5. Einrichtung nach einem oder mehreren der Ansprüche 1 bis 4,
**dadurch gekennzeichnet,**
daß eines der Funktionsglieder des Rotationsmotors (31; 81: 161), z. B. dessen Rotor (33; 83; 163) über Getriebemittel, vorzugsweise mittels eines in an diesem und dem Verstellglied (20, 20') oder einer mit diesem verbundenen Zwischenglied (Ansatz 50, Hülse 52) drehfest angebrachte Zahnriemenscheiben (48; 172) eingreifenden Zahnriemens (49; 173), trieblich mit dem Verstellglied (20, 20') verbunden ist.

6. Einrichtung nach einem oder mehreren der Ansprüche 1 bis 5,
**dadurch gekennzeichnet,**
daß der Rotationsmotor (31; 81; 121; 161) als Elektromotor oder als von Druckmittel beaufschlagbarer hydraulischer Verdrängermotor (31) ausgebildet ist.

7. Einrichtung nach einem oder mehreren der Ansprüche 1 bis 6,
**dadurch gekennzeichnet,**
daß zur Umwandlung der von dem Rotationsmotor (31; 81; 121; 161) abgenommenen Drehbewegung in eine Axialbewegung das Verstellglied (20ʹ) oder ein mit diesem verbundenes Zwischenglied (Hülse 52) drehfest abgestützt und über einen Schraubtrieb (53; 54; 189, 190), vorzugsweise einen Rollenschraubtrieb in Form einer Kugelrollspindel oder dgl., mit einem von dem Rotationsmotor (31; 81; 161) angetriebenen Bauteil (Ansatz 50, Planetenradgetriebe 181) verbunden ist.

8. Einrichtung nach einem oder mehreren der Ansprüche 1 bis 6,
**dadurch gekennzeichnet,**
daß zur Umsetzung einer Relativverdrehung des Rotors (33; 83) des Rotationsmotors (31; 81) gegenüber dessen Stator (32; 82) ein auf einen mit dem Verstellglied (20ʹ) verbundener beidseitig beaufschlagbarer Kolben (93) einwirkendes hydraulisches Gestänge in Form einer Flüssigkeitssäule vorgesehen ist, die mittels einer in Abhängigkeit von der Relativverdrehung der beiden Funktionsglieder (32; 82 bzw. 33; 83) des Rotationsmotors (31; 81) betätigbaren Pumpe (97) verschiebbar ist.

9. Einrichtung nach Anspruch 8,
**dadurch gekennzeichnet,**
daß die vorzugsweise als Zahnradpumpe ausgebildete Pumpe (97) in einem mit der Hauptspindel (3) umlaufenden Gehäuse (91) eingesetzt und mit dem Funktionsglied (Rotor 33; 83) des Rotationsmotors (31; 81) trieblich verbunden ist, das gegenüber dem in Abhängigkeit von der Hauptspindel (3) antreibbaren Funktionsglied (Stator 32; 82) verstellbar ist.

10. Einrichtung nach Anspruch 8 oder 9,
**dadurch gekennzeichnet,**
daß dem hydraulischen Gestänge ein Ausgleichsspeicher (105) zugeordnet ist.

11. Einrichtung nach einem oder mehreren der Ansprüche 1 bis 10,
**dadurch gekennzeichnet,**
daß das Verstellglied (20) über ein diesem vorgeschaltetes mit der Hauptspindel (3) umlaufendes Untersetzungsgetriebe (61) antreibbar ist.

12. Einrichtung nach einem oder mehreren der Ansprüche 1 bis 11,
**dadurch gekennzeichnet,**
daß der Rotationsmotor (121) unmittelbar in dem Gehäuse (130) der Werkzeugmaschine (2) eingesetzt ist und daß dessen gegeneinander verstellbare Funktionsglieder (122, 123) beispielsweise über Zahnräder (131, 132 bzw. 133, 134) als Getriebemittel mit der Hauptspindel (3') und dem Verstellglied (20') in Triebverbindung stehen.

13. Einrichtung nach Anspruch 12,
**dadurch gekennzeichnet,**
daß der Rotor (123) des Rotationsmotors (121) mit der Hauptspindel (3') und dessen drehbar gelagerter Stator (122) mit einer auf dieser verdrehbar angeordneten Hülse (136) in Triebverbindung stehen und daß die Hülse (136) über einen Schraubtrieb (138) mit dem drehfest und axial verschiebbar mit der Hauptspindel (3') verbundenen Verstellglied (20') gekoppelt ist.

14. Einrichtung nach einem oder mehreren der Ansprüche 1 bis 11,
**dadurch gekennzeichnet,**
daß der Stator (162) des Rotationsmotors (161) mit dem Futterkörper (12) eines an eine Werkzeugmaschine (2) angeflanschten Kraftspannfutters (11) und dessen Rotor (163) mit dem in diesem angeordneten Stellglied (20ʹ) in Triebverbindung stehen.

15. Einrichtung nach Anspruch 14,
**dadurch gekennzeichnet,**
daß der Futterkörper (12) mit einem an diesem befestigten Zahnkranz (171) versehen ist, mittels dem dieser über einen Zahnriemen (173) trieblich mit dem Stator (162) des Rotationsmotors (161) verbunden ist.

16. Einrichtung nach Anspruch 14 oder 15,
**dadurch gekennzeichnet,**
daß zur trieblichen Verbindung des Rotors (163) des Rotationsmotors (161) mit dem Stellglied (20') in dem Futterkörper (12) des Spannfutters (11) ein Planetenradgetriebe (181) eingesetzt ist, dessen Hohlrad (183) einen Zahnkranz (175), der über einen Zahnriemen (176) mit dem Rotor (163) des Rotationsmotors (161) verbunden ist, aufweist und über drehbar in dem Futterkörper (12) gelagerte Planetenräder (184) mit einem Sonnenrad (182) in Triebverbindung steht, das über einen Schraubtrieb (189, 190) oder dgl. auf das Stellglied (20') einwirkt.

## Claims

1. A device (1) for actuating the jaws (13, 13') of a heavy duty chuck (11) which are radially adjustable within a driven chuck body (12), and which are connected via wedge bars (15), wedge hooks (23), levers or similar intermediate elements to an adjusting element (20, 20') which may be rotated or moved axially and which is driveably connected to a positioning drive (30; 80; 120; 160) in order to create a rotary adjusting movement, whereby the positioning drive (30; 80; 120; 160) is mounted externally and along a parallel axis to the heavy duty chuck (11) and consists of at least two functional elements, one functional element being connected to a driving element (main spindle 3, 3') and braced in a driving arrangement against this driving element, and the other functional element being driveably connected to the adjusting element (20, 20'),
**characterized in that,**
the functional elements consist solely of a stator (32, 82, 122, 162) and a rotor (33, 83, 123, 163) of a rotary motor (31, 81, 121, 161) which are connected to an energy source by means of a distributor (36, 86, 126), and which are both rotatably mounted in such a way that they can turn in relation to one another, be clamped together when this is required in order to maintain the clamping force, and be adjusted in relation to one another by infinitely variable degrees in order to make a rotary adjusting movement.

2. A device in accordance with Claim 1,
**characterized in that,**
the functional elements (32; 82; 122; 162 or 33; 83; 123; 163) of the rotary motor (31; 81; 121; 161) are clamped together or adjusted in relation to one another by means of the energy supplied to the rotary motor (31; 81; 121; 161).

3. A device in accordance with Claims 1 or 2,
**characterized in that,**
the rotary motor (31; 81; 121; 161) is rotatably mounted in a fixture (34; 84; 124; 164) which is fixed to a machine tool (2) and that the stator (32; 82; 122; 162) is driveably connected to the main spindle (3, 3') of this machine tool (2).

4. A device in accordance with one or more of Claims 1 to 3,
**characterized in that,**
one of the functional elements of the rotary motor (31; 81; 121; 161), for example the stator (32; 82; 162), is driveably connected to and braced against the main spindle (3, 3') by means of a gearing apparatus, preferably consisting of a toothed belt (43; 173) engaging in toothed belt pinions which are attached to the stator (32; 82; 162) and the main spindle (3, 3') in such a way as to prevent them from rotating.

5. A device in accordance with one or more of Claims 1 to 4,
**characterized in that,**
one of the functional elements of the rotary motor (31; 81; 161), for example the rotor (33; 83; 163), is driveably connected to the adjusting element (20, 20') by means of a gearing apparatus, preferably consisting of a toothed belt (48; 172) engaging in toothed belt pinions which are attached to the rotor (33; 83; 163) and the adjusting element (20, 20') or to an intermediate element (shoulder piece 50, sleeve 52) connected to the adjusting element (20, 20') in such a way as to prevent them from rotating.

6. A device in accordance with one or more of Claims 1 to 5,
**characterized in that,**
the rotary motor (31; 81; 121; 161) is an electric motor or a hydraulic positive-displacement motor (31) actuated by pressurized fluid.

7. A device in accordance with one or more of Claims 1 to 6,
**characterized in that,**
in order to transform the rotary movement derived from the rotary motor (31; 81; 121; 161) into axial movement, the adjusting element (20') or an intermediate element (sleeve 52) connected to this adjusting element (20') is braced in such a way as to be prevented from rotating and is connected to a component (shoulder piece 50, planetary gear train 181) driven by the rotary motor (31; 81; 161) by means of a worm drive (53; 54; 189; 190), preferably a roller-type worm drive in the form of a precision ball screw or similar.

8. A device in accordance with one or more of Claims 1 to 6,
**characterized in that,**
in order to convert a relative rotation of the rotor (33, 83) of the rotary motor (31; 81) in relation to the stator (32; 82), a hydraulic linkage in the form of a column of fluid is provided, whereby the fluid acts on a piston (93) which is connected to the adjusting element (20') and which can be actuated from both sides, and whereby the column of fluid can be displaced by means of a pump (97) which is operated in relation to the relative amount of rotation of both functional elements (32; 82 and 33; 83) of the rotary engine (31; 81).

9. A device in accordance with Claim 8,
**characterized in that,**
the pump (97), preferably in the form of a geared pump, is inserted in a housing (91) which rotates with the main spindle (3) and is driveably connected to the functional element (rotor 33; 83) of the rotary motor (31; 81), this functional element being adjustable in relation to the functional element (stator 32; 82) which is driveably connected to the main spindle (3).

10. A device in accordance with Claim 8 or 9,
**characterized in that,**
a compensating reservoir (105) is fitted to the hydraulic linkage.

11. A device in accordance with one or more of Claims 1 to 10,
**characterized in that,**
the adjusting element (20) is driven by a step-down gear stage (61) at the input of the adjusting element (20) which rotates with the main spindle (3).

12. A device in accordance with one or more of Claims 1 to 11,
**characterized in that,**
the rotary motor (121) is inserted just inside the housing (130) of the machine tool (2) and that the functional elements (122, 123) of the housing (130) which can be adjusted in relation to one another, can be driveably connected to the main spindle (3') and adjusting member (20') by such means as gears (131, 132 or 133, 134) which function as the power transmitting elements.

13. A device in accordance with Claim 12,
**characterized in that,**
the rotor (123) of the rotary motor (121) is driveably connected to the main spindle (3') and the stator (122) rotatably mounted on the main spindle (3') is driveably connected to a sleeve (136) fitted on the main spindle (3') in such a way as to allow it to rotate, and that the sleeve (136) is connected through a worm drive (138) to the adjusting member (20') which is connected to the main spindle (3') in a manner which prevents rotation whilst enabling axial movement.

14. A device in accordance with one or more of Claims 1 to 11,
**characterized in that,**
the stator (162) of the rotary motor (161) is driveably connected to the chuck body (12) of a heavy duty chuck (11) mounted on a machine tool (2) and the rotor (163) of the rotary motor (161) is driveably connected to the adjusting element (20') fitted in the heavy duty chuck (11).

15. A device in accordance with Claim 14,
**characterized in that,**
a ring gear (171) is fixed to the chuck body (12) and the ring gear (171) enables the chuck body (12) to be driveably connected to the stator (162) of the rotary motor (161) by means of a toothed belt (173).

16. A device in accordance with Claim 14 or 15,
**characterized in that,**
a planetary gear train (181) is used in order to establish a driveable connection between the rotor (163) of the rotary motor (161) and the adjusting element (20') in the chuck body (12) of the heavy duty chuck (11), whereby the ring gear (183) of the planetary gear train (181) is fitted with an annulus (175) which is connected to the rotor (163) of the rotary motor (161) by means of a toothed belt (176) and is driveably connected to a sun gear (182) by means of planet gears (184) rotatably mounted in the chuck body (12), and the sun gear (182) acts on the adjusting element (20') by means of a worm drive (189, 190) or similar.

## Revendications

1. Equipement (1) d'actionnement de mors de serrage (13, 13') d'un mandrin (11), radialement déplaçables dans un corps de mandrin (12) entraînés et raccordés par l'intermédiaire de crémaillères (15), de rampes (23), de leviers ou d'éléments intermédiaires similaires à un élément de réglage (20, 20') rotatif ou axialement déplaçable qui, pour effectuer un mouvement rotatif de réglage, est lié par une chaîne cinématique à un entraînement (30; 80; 120; 160) disposé extérieurement au mandrin (11) et parallèlement à son axe, entraînement (30; 80; 120; 160) comprenant au moins deux organes de fonction dont l'un est lié à un élément d'entraînement (broche principale 3, 3'), sur lequel il s'appuie, et l'autre à l'élément de réglage (20, 20')
se caractérisant par le fait que
les organes de fonction sont constitués exclusivement par un stator (32, 82, 122, 162) raccordé par l'intermédiaire d'un distributeur (36, 86, 126) à une source d'énergie, et d'un rotor (33, 83, 123, 163) d'un moteur à rotation (31, 81, 121, 161) se laissant pivoter relativement l'un par rapport à l'autre et qui, pour conserver la force de serrage, peuvent être serrés ensemble et déplaces continuellement l'un par rapport à l'autre afin de permettre un mouvement rotatif de réglage.

2. Equipement d'après la revendication 1,
se caractérisant par le fait que
le serrage et/ou le déplacement l'un par rapport à l'autre des organes de fonction (32; 82; 122; 162 ou 33; 83; 123; 163) du moteur à rotation (31; 81; 121; 161) est effectué au moyen de l'énergie fournie au moteur.

3. Equipement d'après les revendications 1 ou 2,
se caractérisant par le fait que
le moteur à rotation (31; 81; 121; 161) est logé d'une manière pivotante dans un support (34; 84; 124; 164) attelé sur une machine-outil (2) et que le stator (32; 82; 122; 162) est raccordé par chaîne cinématique à la broche principale (3, 3') de la machine.

4. Equipement d'après une ou plusieurs des revendications 1 à 3,
se caractérisant par le fait que
l'un des organes de fonction du moteur à rotation (31; 81; 121; 161), p. ex. son stator (32; 82; 122; 162), est lié par l'intermédiaire d'une transmission, de préférence une courroie dentée (43; 173) s'engrenant dans des poulies de courroie dentée (41, 41'; 172) non rotatives sur le stator et la broche principale (3, 3'), à la broche principale (3, 3') par laquelle il est entraîné et sur laquelle il s'appuie.

5. Equipement d'après une ou plusieurs des revendications 1 à 4,
se caractérisant par le fait que
l'un des organes de fonction du moteur à rotation (31; 81; 121; 161), p. ex. son rotor (33; 83; 123; 163), est lié par l'intermédiaire d'une transmission, de préférence une courroie dentée (49; 173) s'engrenant dans des poulies de courroie dentée (48; 172) non rotatives sur le rotor et l'élément de réglage (20, 20') ou sur un élément intermédiaire (embout 50, douille 52) lié à celui-ci, à l'élément de réglage (20, 20').

6. Equipement d'après une ou plusieurs des revendications 1 à 5,
se caractérisant par le fait que
le moteur à rotation (31; 81; 121; 161) est conçu sous la forme d'un moteur électrique ou d'un moteur hydraulique à déplacement (31) soumis à l'effet d'un fluide.

7. Equipement d'après une ou plusieurs des revendications 1 à 6,
se caractérisant par le fait que
pour la transformation du mouvement rotatif pris du moteur rotatif (31; 81; 121; 161) en un mouvement axial, l'élément de réglage (20') ou un élément intermédiaire raccordé (douille 52) monté de façon non rotative est lié par l'intermédiaire d'un entraînement à vis (53; 54; 189, 190), de préférence un pignon baladeur sous la forme d'une broche filetée à billes ou un organe semblable, à un élément (embout 50, engrenage planétaire 181) entraîné par le moteur à rotation (31; 81; 161).

8. Equipement d'après une ou plusieurs des revendications 1 à 6,
se caractérisant par le fait que
pour la transformation de la rotation relative du rotor (33; 83) du moteur à rotation (31, 81) par rapport à son stator (32; 82), il est prévu une tringlerie hydraulique sous la forme d'une colonne de liquide agissant sur un piston (93) actionné des deux côtés et raccordé à l'élément de réglage (20'), colonne de liquide qui est déplacée par une pompe (97) commandée en fonction du mouvement relatif des deux organes de fonction (32, 82 ou 33; 83) du moteur à rotation(31; 81).

9. Equipement d'après la revendication 8,
se caractérisant par le fait que
la pompe (97) conçue de préférence en tant que pompe à engrenage est montée dans un carter (91) pivotant avec la broche principale (3) et liée par chaîne cinématique à l'organe de fonction (rotor 33; 83) du moteur à rotation (31; 81) qui se laisse déplacer par rapport à l'organe de fonction (stator 32; 82) entraîné en dépendance de la broche principale (3).

10. Equipement d'après les revendications 8 ou 9,
se caractérisant par le fait
qu'il est attribué à la tringlerie hydraulique un réservoir de compensation (105).

11. Equipement d'après une ou plusieurs des revendications 1 à 10,
se caractérisant par le fait que
l'élément de réglage (20) est entraîné par un engrenage réducteur (61) monté en amont et pivotant avec la broche principale (3).

12. Equipement d'après une ou plusieurs des revendications 1 à 11,
se caractérisant par le fait que
le moteur à rotation (121) est monté directement dans le carter (130) de la machine-outil (3) et que ses organes de fonction (122, 123), qui se laissent déplacer l'un contre l'autre, sont liés par exemple par des roues dentées (131, 132 ou 133, 134) en tant que transmission, avec la broche principale (3') et l'élément de réglage (20').

13. Equipement d'après la revendication 12,
se caractérisant par le fait que
le rotor (123) du moteur à rotation (121) est lié par chaîne cinématique à la broche principale (3') et son stator pivotant (122) à une douille (136) pivotante sur la broche et que la douille (136) est raccordée par l'intermédiaire d'un entraînement à vis (138) à l'élément de réglage (20') non pivotant et lié d'une manière axialement déplaçable à la broche principale (3').

14. Equipement d'après une ou plusieurs des revendications 1 à 11,
se caractérisant par le fait que
que le stator (162) du moteur à rotation (161) est lié par chaîne cinématique au corps (12) d'un mandrin motorisé (11) attelé à une machine-outil (2), et son rotor (163) à l'élément de réglage (20') prévu dans celui-ci.

15. Equipement d'après la revendication 14,
se caractérisant par le fait que
le corps du mandrin (12) est muni d'une couronne dentée (171) rapportée, qui lui assure avec une courroie dentée (173) le raccordement avec le stator (162) du moteur à rotation (161).

16. Equipement d'après les revendications 14 ou 15,
se caractérisant par le fait que
pour assurer la chaîne cinématique entre le rotor (163) du moteur à rotatation (161) et l'élément de réglage (20'), il est monté dans le corps (12) du mandrin de serrage (11) un engrenage planétaire (181), dont la roue creuse (183) comporte une couronne dentée (175) liée par une courroie dentée (176) au rotor (163) du moteur à rotation (161) et qui, par l'intermédiaire de roues planétaires (184) tournant dans le corps du mandrin (12) est raccordée à une roue solaire (182) agissant par le truchement d'un entraînement à vis (189, 190) ou d'un dispositif semblable sur l'élément de réglage (20').
